# EUROPEAN PATENT APPLICATION

(11) **EP 4 411 329 A1**
(43) Date of publication of application: **07.08.2024**
(21) Application number: 24154447.7
(22) Date of filing: 29.01.2024
(51) Int. Cl.: G01G 19/393

(54) **WEIGHING AND COUNTING APPARATUS**

(30) Priority: 06.02.2023 JP 2023016158
(71) Applicant: Ishida Co., Ltd., Kyoto-shi Kyoto 606-8392 (JP)
(72) Inventor: IWAMOTO, Masakuni, Ritto-shi, Shiga, 520-3026 (JP); FUJITA, Shinichi, Ritto-shi, Shiga, 520-3026 (JP); MORI, Hisashi, Ritto-shi, Shiga, 520-3026 (JP); KUDO, Daisuke, Ritto-shi, Shiga, 520-3026 (JP); YAMAMOTO, Yoichi, Ritto-shi, Shiga, 520-3026 (JP)
(74) Representative: Gill Jennings & Every LLP

(57) **Abstract**

A weighing and counting apparatus (1) for obtaining a combination of articles (X) based on the number and weight of articles (X) supplied to a plurality of hoppers (10) includes: a shutter (11) that is installed in an inlet port of the hoppers (10) and temporarily receives the articles (X) to be put into the hopper (10); an image processing unit (12) that calculates the number of articles (X) based on an image of the articles (X) captured from above the shutter (11); and a control unit (13) that operates the shutter (11) to put the articles (X) into the hopper (10) after the image of the articles (X) is acquired.

## Description

### Technical Field

The present invention relates to a weighing and counting apparatus.

### Background Art

Conventionally, there is known a weighing and counting apparatus capable of counting the number of articles in a weighing hopper by dividing the weight of the articles put into the weighing hopper by a single weight of the article. Here, the single weight indicates the weight per article.

However, such a weighing and counting apparatus has a problem that an error occurs in the number of obtained articles when the single weights of the articles are uneven.

Therefore, there is known a weighing and counting apparatus that counts the number of falling articles supplied from a feeding trough to a pool hopper with a photosensor, a photoelectric tube, or the like, and performs combination calculation based on the obtained number and weight of the articles.

### Citation List

### Patent Literature

Patent Literature 1: JP 6-144543 A
Patent Literature 2: JP 2003-177056 A

### Summary of Invention

However, in the weighing and counting apparatus that performs counting with a photosensor, a photoelectric tube, or the like, if plural articles are in close contact with each other or plural articles overlap each other in a front-back direction, there is still a problem that an error occurs in the obtained number of articles.

In order to solve such a problem, it is necessary to align articles in a line and then feed the articles into the pool hopper, but in this case, there is a problem that the processing capacity decreases.

Therefore, the present invention has been made in view of the above problems, and the purpose of the invention is to provide a weighing and counting apparatus capable of accurately performing combination calculation based on the number and weight of articles without deteriorating processing capability even when single weights of the articles are uneven.

A weighing and counting apparatus according to an embodiment is summarized as a weighing and counting apparatus for obtaining a combination of articles based on the number and weight of articles supplied to a plurality of hoppers, characterized in that it includes: a shutter that is installed in an inlet port of the hoppers and temporarily receives the articles (X) to be put into the hopper; an image processing unit that calculates the number of articles based on an image of the articles captured from above the shutter; and a control unit that operates the shutter to put the articles into the hopper after the image of the articles is acquired.

A weighing and counting apparatus is summarized as a weighing and counting apparatus for obtaining a combination of articles based on the number and weight of articles supplied to a plurality of hoppers, characterized in that it includes: a plurality of supply units that is provided corresponding to each of the hoppers and supplies the articles (X) to each of the hoppers; and an image processing unit that calculates the number of articles on the supply units based on an image of the articles captured from above the supply units.

According to the present invention, it is possible to provide a weighing and counting apparatus capable of accurately performing combination calculation based on the number and weight of articles without deteriorating processing capability even when single weights of the articles are uneven.

### Brief Description of Drawings

Fig. 1 is a diagram for describing an example of an overall configuration of a weighing and counting apparatus 1 according to an embodiment.
Fig. 2 is an enlarged view of a portion A in Fig. 1.
Fig. 3 is a flowchart illustrating an example of operation of the weighing and counting apparatus 1 according to the embodiment.

### Description of Embodiments

Hereinafter, the present embodiment will be described in detail with reference to the attached drawings. In the following description of the drawings, the same or similar parts are denoted by the same or similar reference symbols. However, note that the drawings are schematic, and ratios of dimensions are different from actual ones. Therefore, specific dimensions and the like are determined in consideration of the following description. Moreover, there may be portions where dimensional relationships or proportions are different among the drawings. In this specification and the drawings, elements having substantially the same function and configuration are denoted by the same reference numerals to omit redundant description, and elements not directly related to the present invention are omitted.

### (First Embodiment)

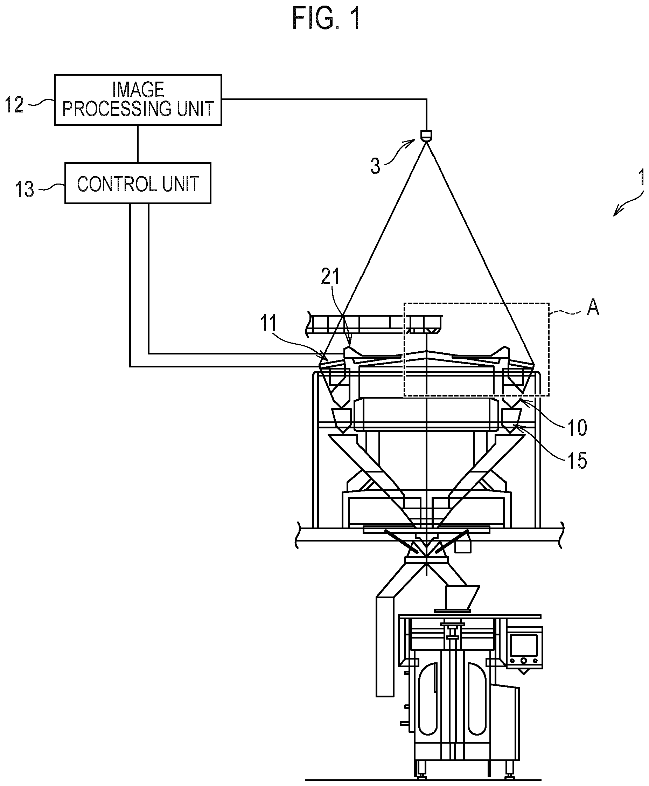

Hereinafter, a weighing and counting apparatus 1 according to a first embodiment of the present invention will be described with reference to Figs. 1 to 3.

The weighing and counting apparatus 1 according to the present embodiment is configured to obtain a combination of articles based on the number and weight of articles X supplied to a plurality of hoppers 10.

As illustrated in Fig. 1, the weighing and counting apparatus 1 includes a plurality of supply units 21, a plurality of hoppers 10, a plurality of shutters 11, an image processing unit 12, and a control unit 13.

Each of the plurality of supply units 21 is provided corresponding to each of the hoppers 10, and is configured to supply an article X received from a dispersion table 14 to each of the plurality of hoppers 10. Such supply units 21 are radially arranged around a dispersion table 14 in the center of the apparatus. Such a supply unit 21 includes a supply feeder that vibrates a trough with an electromagnetic vibrator but may be a belt conveyor.

Each of the plurality of hoppers 10 is a pool hopper configured to temporarily hold the article X supplied from the supply unit 21 via the shutter 11 and then discharge the article X downstream.

In addition, although a weighing hopper 15 is arranged in the lower stage of the pool hopper 10, it may be configured such that the upper pool hopper 10 is eliminated and the weighing hopper 15 is arranged therein. That is, the shutter 11 may be arranged instead of the pool hopper 10, and the weighing hopper 15 may be arranged immediately below the shutter.

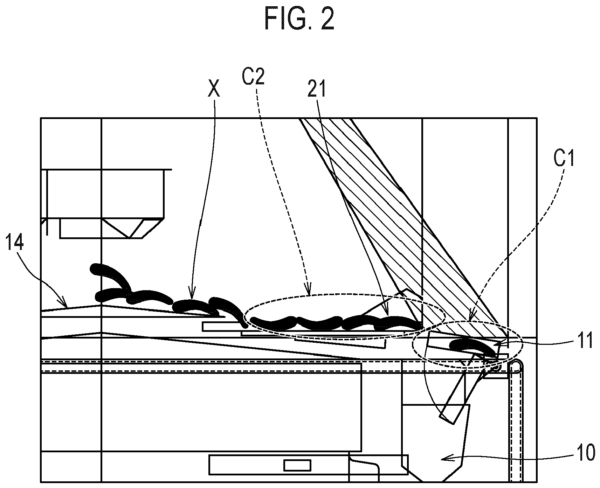

As illustrated in Fig. 2, each of the plurality of shutters 11 is installed in each inlet port of the hopper 10 and is configured to temporarily receive the article X to be put into the hopper 10.

Further, the shutter 11 is configured to temporarily retain the plurality of articles X in a state where the plurality of articles X spreads in a planar manner or in a state where the plurality of articles X is aligned in a V groove even when the plurality of articles X is sequentially supplied while the articles X conveyed from the supply unit 21 are set to be inclined downward so as not to overlap each other vertically. Note that, when the shutter 11 is opened, the articles X temporarily staying on the shutter 11 falls into the inlet port of the hopper 10.

The image processing unit 12 is configured to calculate the number of articles X based on an image C1 of the articles X captured from above the shutter 11.

Here, as illustrated in Fig. 2, the image C1 of the articles X is an image of the articles X temporarily staying on the shutter 11. As illustrated in Figs. 1 and 2, the image C1 of the articles X is captured by an imaging device 3 provided above the dispersion table 14 of the weighing and counting apparatus 1. The imaging device 3 is configured to transmit the captured image of the article X to the image processing unit 12.

Note that, in Fig. 1, one imaging device 3 is arranged above the dispersion table 14, but for example, the region where the plurality of shutters 11 is arranged may be divided into a plurality of groups, and the imaging device 3 and the image processing unit 12 may be individually arranged in each of the groups.

For example, the image processing unit 12 is configured to calculate the number of articles X by performing predetermined processing on the image C1 of the article X transmitted from the imaging device 3.

For example, the image processing unit 12 extracts a region of the articles X from the binarized image, and calculates the number of articles from labeling process, an area, or a length of the extracted region.

Furthermore, in a case where the articles X are in contact or partially overlap, the image processing unit 12 determines the number of articles X from the shapes of the regions of the articles X. The image processing unit 12 may use image recognition processing by AI or the like as a determination method in that case.

When the imaging device 3 transmits the image C1 of the articles X to the image processing unit 12, the control unit 13 immediately operates the shutter 11 to put the articles X into the hopper 10.

On the other hand, the image processing unit 12 is configured to calculate the number of articles X from the received image C1 of the articles X. However, if the processing speed of the image processing unit 12 is improved, the shutter 11 may be operated to put the articles X into the hopper 10 after the image C1 of the articles X is acquired and the number of articles X is calculated.

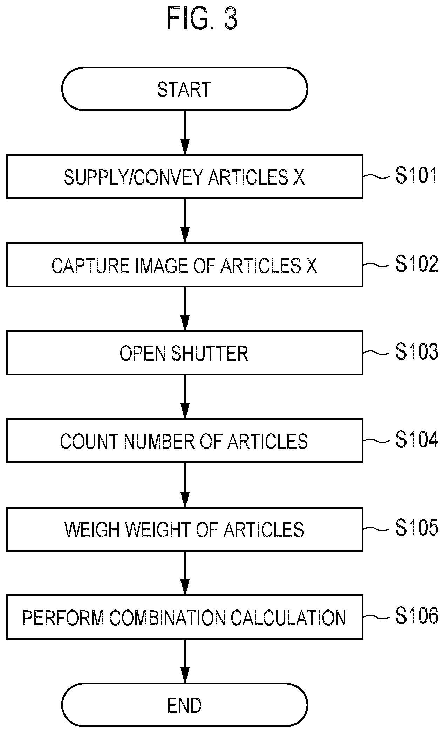

Hereinafter, an example of the operation of the weighing and counting apparatus 1 according to the present embodiment will be described with reference to Fig. 3.

As illustrated in Fig. 3, in step S101, the weighing and counting apparatus 1 conveys the articles X supplied from the outside to the dispersion table 14 to the shutter 11 by the supply unit 21.

In step S102, the imaging device 3 captures an image of the articles X staying on the shutter 11.

In step S103, the control unit 13 of the weighing and counting apparatus 1 operates the shutter 11 to open and puts the article X into the inlet port of the hopper 10.

In step S104, the image processing unit 12 of the weighing and counting apparatus 1 counts the number of articles X based on the captured image C1 of the article X.

In step S105, the weighing and counting apparatus 1 weighs the weight of the articles X in the phase when the articles X are transferred from the upper hopper 10 to the weighing hopper 15. However, the respective processes of step S104 and step S105 may be simultaneously processed in parallel.

In step S106, the weighing and counting apparatus 1 performs combination calculation based on the number of articles X counted in step S104 and the weight of the articles X weighed in step S105.

According to the present embodiment, since the shutter 11 can be operated after the number of articles X on the shutter 11 is counted, the number of articles X supplied to the hopper 10 can be reliably ascertained.

### (Second Embodiment)

Hereinafter, a weighing and counting apparatus 1 according to a second embodiment of the present invention will be described focusing on differences from the weighing and counting apparatus 1 according to the first embodiment described above.

In the weighing and counting apparatus 1 according to the present embodiment, the shutter 11 may not be provided.

Therefore, in the present embodiment, as illustrated in Fig. 2, the image processing unit 12 is configured to calculate the number of articles X on the supply unit 21 based on the image C2 of the articles X captured from above the supply unit 21.

That is, in the present embodiment, the imaging device 3 is configured to capture the image C2 of the articles X conveyed on the supply unit 21 and transmit the image C2 to the image processing unit 12.

Here, the image processing unit 12 may be configured to calculate the number of articles X supplied to the hopper 11 by an operation of the supply unit 21 based on the images C2 of the articles X before and after the operation of the supply unit 21.

For example, the image processing unit 12 may count how many individual articles X in the image C2 captured before the supply unit 21 is operated have disappeared from the image C2 when the operation of the supply unit 21 is stopped, and may grasp the number of articles X supplied to the hopper 10 from the number of the disappeared articles X.

In this case, the image processing unit 12 distinguishes articles X in the image C2 captured immediately before the operation and subsequent articles X subsequently entering the image C2 from each other in the image C2. This makes it easy to grasp how many articles X in the image C2 captured immediately before the operation have disappeared by the operation of the supply unit 21.

According to the present embodiment, even when the existing supply unit 21 (supply feeder) in which the shutter 11 is not provided in the inlet port of the hopper 10 is used, the number of the articles X supplied to the hopper 10 can be reliably grasped, so that the weighing and counting apparatus 1 can be manufactured at low cost.

Although the present invention is explained in detail using the above-mentioned embodiments, it will be apparent to those skilled in the art that the present invention is not limited to the embodiments described herein. The present invention can be implemented as modifications and changes without departing from the spirit and scope of the present invention defined by the description of the claims. Accordingly, the description of the present specification is for the purpose of illustration and is not intended to limit the present invention in any way.

### Reference Signs List

- 1: Weighing and counting apparatus
- 3: Imaging device
- 10: Hopper
- 11: Shutter
- 12: Image processing unit
- 13: Control unit
- 21: Supply unit
- X: Article

## Claims

1. A weighing and counting apparatus (1) for obtaining a combination of articles (X) based on the number and weight of articles (X) supplied to a plurality of hoppers (10), **characterized in that** it comprises:
a shutter (11) that is installed in an inlet port of the hoppers (10) and temporarily receives the articles (X) to be put into the hopper (10);
an image processing unit (12) that calculates the number of articles (X) based on an image of the articles (X) captured from above the shutter (11); and
a control unit (13) that operates the shutter (11) to put the articles (X) into the hopper (10) after the image of the articles (X) is acquired.

2. A weighing and counting apparatus (1) for obtaining a combination of articles (X) based on the number and weight of articles (X) supplied to a plurality of hoppers (10), **characterized in that** it comprises:
a plurality of supply units (21) that is provided corresponding to each of the hoppers (10) and supplies the articles (X) to each of the hoppers (10); and
an image processing unit (12) that calculates the number of articles (X) on the supply units (21) based on an image of the articles (X) captured from above the supply units (21).

3. The weighing and counting apparatus (1) according to claim 2, **characterized in that** the image processing unit (12) calculates the number of the articles (X) supplied to the hoppers (10) by an operation of the supply units (21) based on respective images of the articles (X) before and after the operation of the supply units (21).

4. The weighing and counting apparatus (1) according to claim 2 or 3, **characterized in that** the supply units (21) are belt conveyors.
